# EUROPEAN PATENT SPECIFICATION

(11) **EP 2 703 213 B1**
(45) Date of publication and mention of the grant of the patent: **29.04.2015**
(21) Application number: 13180575.6
(22) Date of filing: 15.08.2013
(51) Int. Cl.: B60P 1/44, B60P 3/07, B60P 3/40, B62D 33/02

(54) **Cargo bed for a truck, lorry or trailer**
Ladeboden für eine Zugmaschine, Lastkraftwagen oder Anhänger
Lit de marchandises pour camion, poids-lourd ou remorque

(30) Priority: 04.09.2012 DK 201200546
(43) Date of publication of application: 05.03.2014
(73) Proprietor: Lavmands Last & Karrosseri A/S, 4100 Ringsted (DK)
(72) Inventor: Lavmand, Per, 3060 Espergærde (DK)
(74) Representative: Nordic Patent Service A/S

(56) References cited:
- GB-A- 2 450 559
- US-A- 3 684 308
- US-A1- 2009 189 403
- US-B1- 7 581 917
- US-B1- 7 641 251
- US-B1- 8 191 743

## Description

The present disclosure relates to a cargo bed for a cargo compartment of a truck, lorry or trailer.

More particularly the invention relates to a cargo bed for transporting elongated items, especially metal profiles.

### BACKGROUND ART

The trucks or lorries are often provided with a cargo bed for transporting various types of goods, such as plates and profiles. The cargo bed assembly is mounted on a truck chassis comprising suitable running gear.

These trucks need to transport good of different shape and size. The length of the cargo bed is limited by the distance between the rear of the cabin of the truck and the rear end of the chassis of the truck, and this distance limits the maximum length of the goods that can be transported. Such trucks are known from US 8191743 and GB2450559.

### DISCLOSURE OF THE INVENTION

On this background, it is an object of the invention to provide cargo bed assembly (5) for a truck or lorry (1), that overcomes or at least relieve the problems of associated with the prior art cargo bed assemblies.

This object is achieved by providing a cargo bed assembly for a truck or lorry, said cargo bed assembly comprising a rectangular bed with a front end and a rear end, a forward direction associated with said cargo bed assembly, said forward direction extending from said rear end to said front end, a rearward direction associated with said cargo bed, said rearward direction extending from said front end to said rear end, said rectangular bed being divided into two elongated bed portions along a line extending from said front end to said rear end, a first bed portion of said two bed portions being stationary and configured to be used in a horizontal configuration, the second bed portion of said two bed portions being configured to raised and lowered at its front end so that it can be used in a horizontal configuration and in a tilted configuration, and said second bed portion being configured to move in a forward direction to extend the length of the second bed portion when the front end of the second bed portion is raised and to move back in the rearward direction when the front end second bed portion is lowered.

By elevating and extending the second bed portion the latter is able to transport object with a large longitudinal extend, whilst other objects with a lesser longitudinal extent can be transported in the first bed portion. This provides for a cargo bed assembly that is much more flexible in use and can accommodate simultaneously relatively long objects on the second cargo bed portion and less long objects on the first cargo bed portion.

Preferably, the front end of said second bed portion is supported by a pivot arm. Such a pivot arm allows the front end of the second bed portion to be raised and most in the forward direction in connection with a pivoting movement of the arm.

In an embodiment the cargo bed assembly is provided near or at said rear end with a stationary and tilted support structure so as to form an extension of the second bed portion.

In an embodiment a fixed support arm projects downwardly from the rear end of the second bed portion with the free extremity of said fixed support arm resting on and being guided by said tilted support structure.

The object above is also tamed by providing a truck or lorry provided with a cargo bed assembly.

Preferably, the truck or lorry is provided with a forward mounted cabin and said second bed portion extends partially over said cabin.

Further objects, features, advantages and properties of the cargo bed assembly and truck or lorry according to the disclosure will become apparent from the detailed description.

### BRIEF DESCRIPTION OF THE DRAWINGS

In the following detailed portion of the description, the invention will be explained in more detail with reference to the exemplary embodiments shown in the drawings, in which:
Fig. 1, is a side view of a truck with a cargo deb assembly according to an exemplary embodiment with a second bed portion in a lowered and retracted position,
Fig. 2, is a side view of the truck of Fig. 1 with the second bed portion in a raised and extended position,
Fig. 3a is a perspective view of the cargo bed assembly of Fig. 1 with the second bed portion in a lowered and retracted position,
Fig. 3b is an enlarged detail of Fig. 3a,
Fig. 4a is a perspective view of the cargo bed assembly of Fig. 1 with the second bed portion in a raised and extended position,
Fig. 4b is an enlarged detail of Fig. 4a, and
Fig. 4c is another enlarged detail of Fig. 4a.

### DETAILED DESCRIPTION OF PREFERRED EMBODIMENTS

In the following detailed description the cargo bed assembly 5 will be described in relation to a truck or lorry 1 to which the cargo bed assembly 5 is fitted.

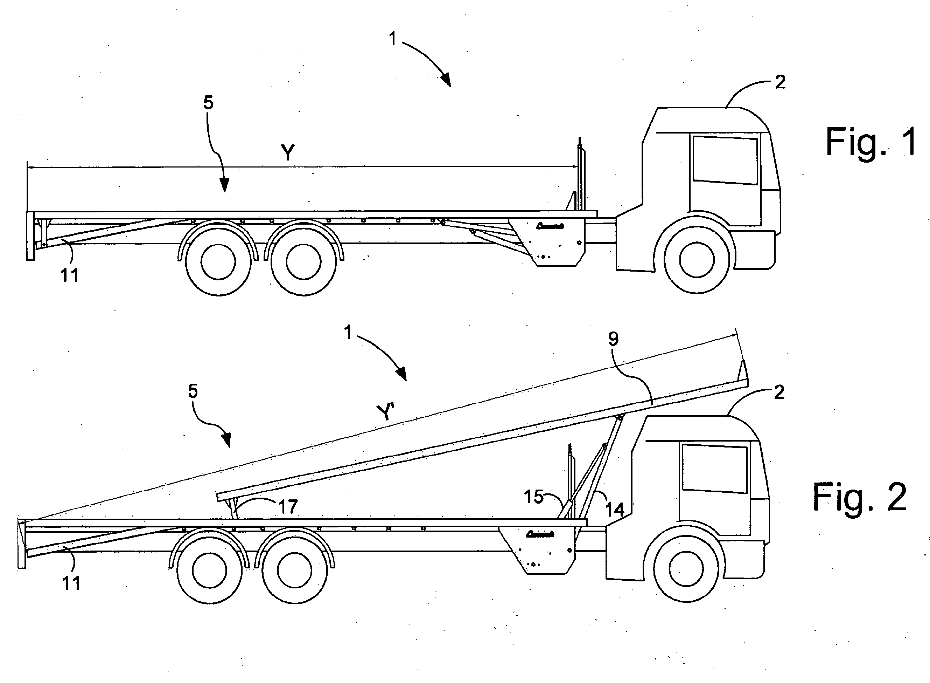

Figure 1 shows a truck 1 with a forward cabin 2 and a cargo bed assembly 5 supported by the chassis of the truck 1.

The cargo bed assembly 5 has an effective length Y between the front end 3 and the rear end 4 of the cargo bed assembly 5.

Figure 2 shows the truck of figure 1 with a cargo bed portion 9 of the cargo bed assembly in a raised and extended position. The cargo bed portion 9 has an effective length Y' that is substantially longer than the length Y.

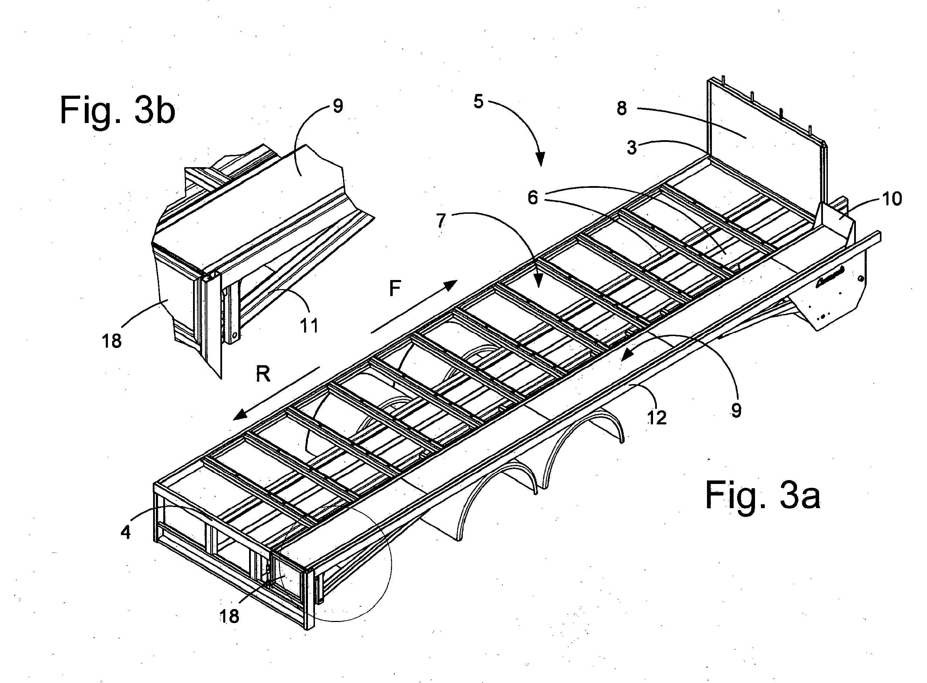

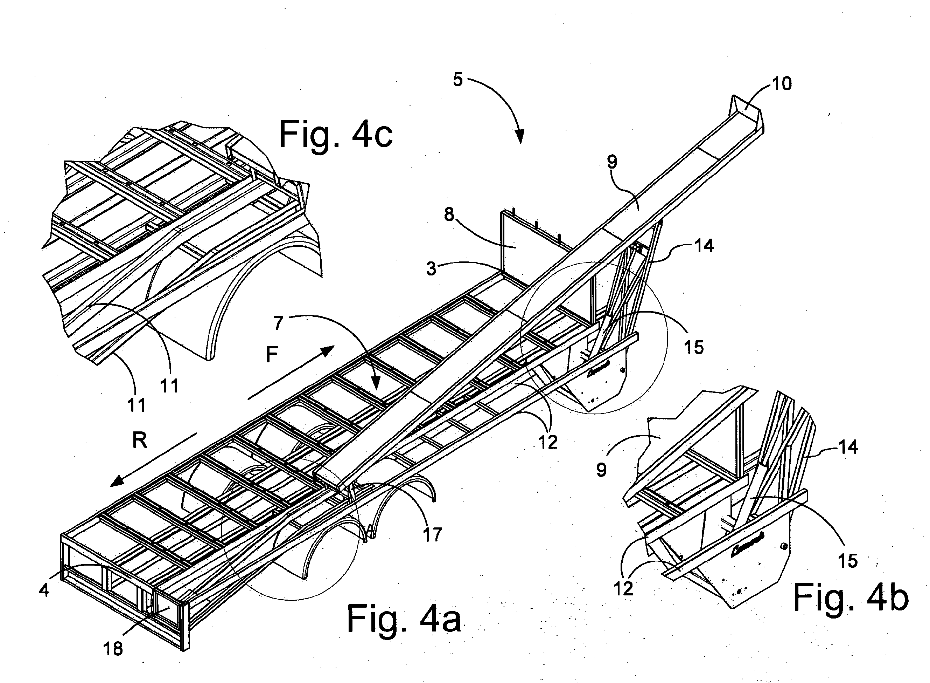

Figures 3a, 3b, 4a, 4b and 4c show the cargo bed assembly in greater detail.

The frame of cargo bed assembly 5 includes a longitudinally extending beams 6 for support. The cargo bed assembly 5 as a front end 3 and a rear end 4. A forward direction F and a rearward direction R are associated with the cargo bed assembly 5. The cargo bed assembly is divided lengthwise into a fixed cargo bed portion 7 and a flexible cargo bed portion 9. In the shown embodiment the fixed cargo bed portion 7 is wider than the flexible cargo bed portion 9, but this does not need to be the case, be flexible cargo bed portion 9 may just as well have the same width or beat wider than the fixed cargo bed portion 7.

The fixed cargo bed portion 7 can only be used in a substantially horizontal orientation. The forward end of the fixed cargo bed portion 7 is delimited by an upstanding plate 8. The forward end of the flexible cargo bed portion 9 is delimited by an upstanding plate 10.

The flexible cargo bed portion 9 is configured to be able to be raised at its front end and to be moved in the forward direction when the front end is raised so as to extend its length and assume a tilted position.

In the lowered and retracted position of the flexible cargo bed portion 9 shown in figure 3a the two cargo bed portions 7,9 form together one single continuous and even cargo floor.

The flexible cargo bed portion 9 is at or near its front end supported by a pivot arm 14. One end of the pivot arm 14 is pivotally suspended from the frame of the cargo bed assembly 5. The other end of the pivot arm 14 is pivotally connected to be flexible cargo bed portion 9.

A hydraulic cylinder 15 is positioned between the frame and the pivot arm 14. The hydraulic cylinder 15 is connected to a hydraulic power unit (not shown) that can be controlled by an operator to extend or retract the hydraulic cylinder 15.

When the hydraulic cylinder 15 is completely retracted the pivot arm 14 is positioned horizontally and the flexible cargo bed portion 9 is in its lowered and retracted position. When the hydraulic cylinder 15 extends the pivot arm 14 swings upwardly and the flexible cargo bed portion 9 is raised at its front end and it is simultaneously moved forwardly thereby extending the effective length of the flexible cargo bed portion 9.

When the hydraulic cylinder 15 is retracted the process is reversed and the front end of the flexible cargo bed portion 9 is lowered and the flexible cargo bed portion is moved rearward until the flexible cargo bed portion 9 has assumed its horizontal, lowered and retracted position again.

The rear end of the flexible cargo portion 9 is provided with a downwardly protecting support arm 17. The free and of the support arm 17 rests on- and is guided by two parallel tilted rails 18. The tilted rails 18 serve as an extension of the flexible cargo portion 9 when the flexible cover a portion of 9 is in its extended, raised and tilted position. A plate 18 at the rear end of the cargo bed assembly 5 serves as a stop for cargo that is loaded onto the tilted flexible cargo portion 9.

In its lowered and retracted position the flexible cargo bed that portion 9 is received between two lengthwise extending the beams 12.

In its raised and extended position the flexible cargo bed portion 9 extends over the top of the cabin 2 of the truck.

Although the teaching of this application has been described in detail for purpose of illustration, it is understood that such detail is solely for that purpose, and variations can be made therein by those skilled in the art without departing from the scope of the teaching of this application.

The term "comprising" as used in the claims does not exclude other elements or steps. The term "a" or "an" as used in the claims does not exclude a plurality. The single processor or other unit may fulfill the functions of several means recited in the claims.

## Claims

1. A cargo bed assembly (5) for a truck or lorry (1), said cargo bed assembly (5) comprising:
a rectangular bed with a front end (3) and a rear end (4),
a forward direction (F) associated with said cargo bed assembly (5), said forward direction (F) extending from said rear end (4) to said front end (3),
a rearward direction (R) associated with said cargo bed (5), said rearward direction (R) extending from said front end (3) to said rear end (4),
said rectangular bed being divided into two elongated bed portions (7,9) along a line extending from said front end (3) to said rear end (4),
a first bed portion (7) of said two bed portions being stationary and configured to be used in a horizontal configuration,
the second bed portion (9) of said two bed portions being configured to raised and lowered at its front end so that it can be used in a horizontal configuration and in a tilted configuration,
**characterised in that**,
said second bed portion (9) being configured to move in a forward direction to extend the length of the second bed portion when the front end of the second bed portion is raised and to move back in the rearward direction when the front end second bed portion is lowered.

2. A cargo bed assembly (5) according to claim 1, wherein the front end of said second bed portion (9) is supported by a pivot arm (14).

3. A cargo bed assembly (5) according to claim 1 or 2, further provided near or at said rear end with a stationary and tilted support structure (11) so as to form an extension of the second bed portion (9).

4. A cargo bed assembly (5) according to claim 3, wherein a fixed support arm (17) projects downwardly from the rear end of the second bed portion (9) with the free extremity of said fixed support arm resting on and being guided by said tilted support structure (11).

5. A cargo bed assembly (5) according to any one of claims 1 to 4, wherein two cargo bed portions (7,9) form one single continuous even cargo support surface when the second cargo bed portion (9) is in its lowered retracted position.

6. A truck or lorry (1) provided with a cargo bed assembly (5) according to any one of claims 1 to 4.

7. A truck or lorry (1) according to claim 6, said truck or lorry (1) being provided with a forward mounted cabin (2) and said second bed portion (9) extending partially over said cabin (2).

## Patentansprüche

1. Ladepritschenanordnung (5) für einen Lastkraftwagen oder Lastwagen (1), wobei die Ladepritschenanordnung (5) Folgendes umfasst:
eine rechteckige Pritsche mit einem vorderen Ende (3) und einem hinteren Ende (4),
eine Vorwärtsrichtung (F), die mit der Ladepritschenanordnung (5) verknüpft ist, wobei sich die Vorwärtsrichtung (F) von dem hinteren Ende (4) zu dem vorderen Ende (3) erstreckt,
eine Rückwärtsrichtung (R), die mit der Ladepritschenanordnung (5) verknüpft ist, wobei sich die Rückwärtsrichtung (R) von dem vorderen Ende (3) zu dem hinteren Ende (4) erstreckt,
wobei die rechteckige Pritsche entlang einer Linie, die sich von dem vorderen Ende (3) zu dem hinteren Ende (4) erstreckt, in zwei längliche Pritschenabschnitte (7, 9) geteilt ist,
wobei ein erster Pritschenabschnitt (7) der zwei Pritschenabschnitte unbeweglich und dafür konfguriert ist, in einer horizontalen Konfiguration verwendet zu werden,
wobei der zweite Pritschenabschnitt (9) der zwei Pritschenabschnitte dafür konfiguriert ist, an seinem vorderen Ende angehoben und abgesenkt zu werden, so dass er in einer horizontalen Konfguration und in einer geneigten Konfguration verwendet werden kann, **dadurch gekennzeichnet, dass**
der zweite Pritschenabschnitt (9) dafür konfguriert ist, sich in einer Vorwärtsrichtung zu bewegen, um die Länge des zweiten Pritschenabschnitts zu erweitern, wenn das vordere Ende des zweiten Pritschenabschnitts angehoben wird, und sich in der Rückwärtsrichtung zurückzubewegen, wenn das vordere Ende des zweiten Pritschenabschnitts abgesenkt wird.

2. Ladepritschenanordnung (5) nach Anspruch 1, wobei das vordere Ende des zweiten Pritschenabschnitts (9) durch einen Schwenkarm (14) getragen wird.

3. Ladepritschenanordnung (5) nach Anspruch 1 oder 2, die ferner nahe oder an dem hinteren Ende mit einer feststehenden und geneigten Stützstruktur (11) versehen ist, um so eine Erweiterung des zweiten Pritschenabschnitts (9) zu bilden.

4. Ladepritschenanordnung (5) nach Anspruch 3, wobei ein fixierter Stützarm (17) von dem hinteren Ende des zweiten Pritschenabschnitts (9) nach unten vorspringt, wobei das freie Ende des fixierten Stützarms auf der geneigten Stützstruktur (11) ruht und durch dieselbe geführt wird.

5. Ladepritschenanordnung (5) nach einem der Ansprüche 1 bis 4, wobei die zwei Ladepritschenabschnitts (7, 9) eine einzige durchgehende ebene Ladungsauflagefläche bilden, wenn sich der zweite Pritschenabschnitt (9) in seiner abgesenkten eingezogenen Stellung befindet.

6. Lastkraftwagen oder Lastwagen (1), der mit einer Ladepritschenanordnung (5) nach einem der Ansprüche 1 bis 4 versehen ist.

7. Lastkraftwagen oder Lastwagen (1) nach Anspruch 6, wobei der Lastkraftwagen oder offene Güterwagen (1) mit einer vorn angebrachten Kabine (2) versehen ist und sich der zweite Pritschenabschnitt (9) teilweise über die Kabine (2) erstreckt.

## Revendications

1. Ensemble de lit cargo (5) pour un camion (1), l'ensemble de lit cargo (5) comprenant :
un lit rectangulaire avec une extrémité avant (3) et une extrémité arrière (4),
une direction avant (F) associée à l'ensemble de lit cargo (5), la direction avant (F) s'étendant de l'extrémité arrière (4) vers l'extrémité avant (3),
une direction arrière (R) associée à l'ensemble de lit cargo (5), la direction arrière (R) s'étendant de l'extrémité avant (3) vers l'extrémité arrière (4),
le lit rectangulaire étant divisé en deux parties de lit allongées (7, 9) le long d'une ligne s'étendant de l'extrémité avant (3) vers l'extrémité arrière (4),
une première partie de lit (7) des deux parties de lit étant fixe et configurée pour être utilisée dans une configuration horizontale,
la seconde partie de lit (9) des deux parties de lit étant configurée pour être relevée et abaissée à son extrémité avant de façon à ce qu'elle puisse être utilisée dans une configuration horizontale et une configuration inclinée, **caractérisé en ce que**,
la seconde partie de lit (9) est configurée pour se déplacer dans une direction avant pour étendre la longueur de la seconde partie de lit lorsque l'extrémité avant de la seconde partie de lit est surélevée et pour revenir dans la direction arrière lorsque l'extrémité avant de la seconde partie de lit est abaissée.

2. Ensemble de lit cargo (5) selon la revendication 1, dans lequel l'extrémité avant de la seconde partie de lit (9) est soutenue par un bras de pivot (14).

3. Ensemble de lit cargo (5) selon la revendication 1 ou 2, doté en outre, près de ou sur l'extrémité arrière, d'une structure de support fixe et inclinée (11) de façon à former une extension de la seconde partie de lit (9).

4. Ensemble de lit cargo (5) selon la revendication 3, dans lequel un bras de support fixé (17) fait saillie vers le bas depuis l'extrémité arrière de la seconde partie de lit (9) avec l'extrémité libre du bras de support fixé reposant sur et étant guidée par la structure de support inclinée (11).

5. Ensemble de lit cargo (5) selon l'une quelconque des revendications 1 à 4, dans lequel deux parties de lit cargo (7, 9) forment une surface plane continue unique de support de cargo lorsque la seconde partie de cargo (9) est dans sa position rétractée abaissée.

6. Camion (1) doté d'un ensemble de lit cargo (5) selon l'une quelconque des revendications 1 à 4.

7. Camion (1) selon la revendication 6, le camion (1) étant doté d'une cabine montée à l'avant (2) et la seconde partie de lit (9) s'étendant partiellement au-dessus de la cabine (2).
